# EUROPÄISCHE PATENTSCHRIFT

(11) **EP 3 941 741 B1**
(45) Veröffentlichungstag und Bekanntmachung des Hinweises auf die Patenterteilung: **20.11.2024**
(21) Anmeldenummer: 20709581.1
(22) Anmeldetag: 09.03.2020
(51) Int. Cl.: B32B 17/10

(54) **VERBUNDSCHEIBE MIT EINEM FUNKTIONALEN EINLEGEELEMENT**
COMPOUND GLAZING WITH A FUNCTIONAL INLAID ELEMENT
VITRE COMPOSITE DOTÉE D'UN ÉLÉMENT D'INSERTION FONCTIONNEL

(30) Priorität: 19.03.2019 EP 19163660
(43) Veröffentlichungstag der Anmeldung: 26.01.2022
(73) Patentinhaber: Saint-Gobain Glass France, 92400 Courbevoie (FR)
(72) Erfinder: KOLF, Michael, 52249 Eschweiler (DE); WOHLFEIL, Dirk, 4730 Raeren (BE); VARGA, Gabor, 52134 Herzogenrath (DE); MATHEISEN, Christopher, 52134 Herzogenrath (DE)
(74) Vertreter: Gebauer, Dieter Edmund
(86) Internationale Anmeldenummer: PCT/EP2020/056164
(87) Internationale Veröffentlichungsnummer: WO 2020/187620

(56) Entgegenhaltungen:
- WO-A1-2017/157626
- WO-A1-2018/215106
- DE-A1- 102009 026 021
- DE-A1- 102012 018 001
- DE-C1- 10 249 992

## Beschreibung

Die Erfindung betrifft eine Verbundscheibe mit einem funktionalen Einlegeelement, ein Verfahren zu ihrer Herstellung und ihre Verwendung.

Moderne Fahrzeuge werden mit einer steigenden Anzahl an Sensoren ausgestattet, deren Signale beispielsweise zur Unterstützung des Fahrers verwendet werden. Beispiele solcher Sensoren sind optische Sensoren, wie Kameras, beispielsweise Videokameras oder Nachtsichtkameras, Regensensoren, Lichtsensoren oder Abstandsmesser. Nach vorne gerichtete Sensoren werden häufig an der innenraumseitigen Oberfläche der Windschutzscheibe befestigt, typischerweise mittig in der Nähe der Oberkante. Die Sensoren werden im Stand der Technik durch einen opaken Abdeckdruck auf der Windschutzscheibe verdeckt. Dazu ist der übliche periphere, rahmenartige Abdeckdruck, der in erster Linie als UV-Schutz für den Montagekleber der Windschutzscheibe dient, im Bereich der Sensoren deutlich in Richtung der Scheibenmitte vergrößert.

Herkömmliche Sensoren sind so an der Windschutzscheibe angebracht, dass ihre Detektionsrichtung horizontal verläuft. Da die Windschutzscheibe stark geneigt im Fahrzeug installiert ist, beispielsweise mit einem Einbauwinkel von 60° zur Vertikalen, schließt die Detektionsrichtung des Sensors einen sehr spitzen Winkel von etwa 30° mit der Windschutzscheibe ein. Daraus resultiert ein vergleichsweise großes, im Wesentlichen trapezförmiges, sogenanntes Sensorfenster der Windschutzscheibe. Das Sensorfenster ist derjenige Bereich der Windschutzscheibe, durch den verlaufende Strahlung durch den Sensor detektiert wird. Das Sensorfenster der Windschutzscheibe ist also der Bereich, der im Detektionsstrahlengang des Sensors liegt.

Je mehr Sensoren an der Scheibe befestigt werden sollen, desto mehr Fläche der Windschutzscheibe wird durch die Summe der Sensorfenster eingenommen und desto größer muss der Abdeckdruck ausgebildet werden, der die Sensoren verdecken soll.

Der Abdeckdruck wird bei der Herstellung einer Verbundscheibe im Siebdruck vor dem Biegen der einzelnen Scheiben auf die Außenscheibe oder die Innenscheibe aufgebracht. Während des Biegeprozesses, der üblicherweise bei Temperaturen von 500 °C bis 700 °C durchgeführt wird, wird die Hitze von dem Siebdruck stärker absorbiert als von der jeweiligen Scheibe. Dies kann zu optischen Verzerrungen in von Siebdruck, insbesondere Schwarzdruck, umgebenen Sensorfenstern und/oder zur Glasbruch führen.

Die Sensorfenster sollten frei von Eis oder Beschlag gehalten werden. Dies kann beispielsweise durch beheizbare Sensorfenster ermöglicht werden. Dazu werden beispielsweise im Bereich der Sensorfenster Heizdrähte einlaminiert. Solche einlaminierte Heizdrähte sind jedoch unvorteilhaft für die optische Qualität der Sensorfenster.

Heutzutage werden Sensoren, Heizelemente und Antennen an der Innenseite der Innenscheibe aufgebracht oder im Laminat eingebracht und der Abdeckdruck zur Abdeckung der Sensoren, Heizelemente und Antennen wird in einem separaten Arbeitsschritt und als separate Schicht aufgebracht. Zudem werden die einzelnen funktionalen Elemente, d.h. die Sensoren, Heizelemente oder Antennen einzeln aufgebracht bzw. eingebracht.

DE 102 49 992 C1 offenbart eine Verbundscheibe mit einer elektrisch leitfähigen Schicht.

In der DE 10 2012 018 001 A1 und der DE 10 2009 026 021 A1 sind Scheiben mit einem beheizbaren Sensorfeld offenbart.

WO 2017/157626 A1 offenbart eine Windschutzscheibe mit einem Funktionselement mit elektrisch regelbaren optischen Eigenschaften.

In der WO 2018/215106 A1 ist eine Verbundglasscheibe offenbart aufweisend eine erste Glas-Schicht und eine zweite Glas-Schicht, wobei zwischen der ersten Glas-Schicht und der zweiten Glas-Schicht zumindest eine erste elektrisch leitende Struktur und eine zweite elektrisch leitende Struktur angeordnet sind, wobei die erste elektrisch leitende Struktur und die zweite elektrisch leitende Struktur beabstandet zueinander angeordnet sind, wobei die erste elektrisch leitende Struktur die zweite elektrisch leitende Struktur in einer senkrechten Ausrichtung in Bezug auf die erste Glas-Schicht zumindest teilweise überlappt, wobei die erste elektrisch leitende Struktur einem ersten elektrischen Element zugeordnet ist, wobei das erste elektrische Element ein kapazitiver Sensor ist.

Der vorliegenden Erfindung liegt die Aufgabe zugrunde, eine verbesserte Verbundscheibe bereitzustellen, bei der die Gefahr von Glasbruch während des Biegeprozesses vermindert ist, in die ein funktionales Element oder mehrere Elemente mit unterschiedlichen Funktionen eingebracht sind, in der die optische Qualität optional vorhandener Sensorfenster verbessert ist und/oder die einfach herzustellen ist.

Die Aufgabe der vorliegenden Erfindung wird erfindungsgemäß durch eine Verbundscheibe gemäß Anspruch 1 gelöst. Bevorzugte Ausführungen gehen aus den Unteransprüchen hervor.

Die erfindungsgemäße Verbundscheibe umfasst mindestens eine erste Scheibe und eine zweite Scheibe, die über mindestens eine thermoplastische Zwischenschicht miteinander verbunden sind, und ein funktionales Einlegeelement, dass zwischen der ersten Scheibe und der zweiten Scheibe angeordnet ist.

Erfindungsgemäß umfasst das funktionale Einlegeelement eine Trägerschicht und mindestens ein elektrisch leitfähiges Element.

In einer bevorzugten Ausführungsform umfasst das funktionale Einlegeelement eine Trägerschicht und mindestens zwei elektrisch leitfähige Elemente, wobei die elektrisch leitfähigen Elemente bevorzugt unterschiedlich strukturiert sind.

In einer Ausführungsform der erfindungsgemäßen Verbundscheibe umfasst das funktionale Einlegeelement eine Trägerschicht und genau ein elektrisch leitfähiges Element.

In einer weiteren Ausführungsform umfasst das funktionale Einlegeelement eine Trägerschicht und zwei elektrisch leitfähige Elemente.

In einer weiteren Ausführungsform umfasst das funktionale Einlegeelement eine Trägerschicht und drei elektrisch leitfähige Elemente.

In einer weiteren Ausführungsform umfasst das funktionale Einlegeelement eine Trägerschicht und vier elektrisch leitfähige Elemente.

In einer weiteren Ausführungsform umfasst das funktionale Einlegeelement eine Trägerschicht und fünf elektrisch leitfähige Elemente.

In weiteren Ausführungsformen umfasst das funktionale Einlegeelement eine Trägerschicht und sechs oder mehr elektrisch leitfähige Elemente.

In einer Alternative umfasst die Trägerschicht eine transparente Substratschicht und eine opake Schicht.

In einer weiteren Alternative umfasst die Trägerschicht eine transparente Substratschicht, die zumindest bereichsweise opak eingefärbt ist. Bevorzugt ist in dieser Ausführungsform die transparente Substratschicht nicht vollflächig opak eingefärbt, es sind jedoch auch Ausführungsformen möglich, in denen die transparente Substratschicht vollflächig opak eingefärbt ist und somit nicht mehr transparent ist. Unter einer bereichsweisen opaken Einfärbung ist insbesondere eine Einfärbung zu verstehen, in der Art, dass Bereiche, die in der fertigen Verbundscheibe als ein Sensorfenster für einen optischen Sensor dienen sollen, bei der opaken Einfärbung ausgespart sind, d.h. nicht opak eingefärbt sind.

In einer Ausführungsform ist im funktionalen Einlegeelement das mindestens eine elektrisch leitfähige Element auf der transparenten Substratschicht angeordnet.

In einer weiteren Ausführungsform ist im funktionalen Einlegeelement das mindestens eine elektrisch leitfähige Element zwischen der transparenten Substratschicht und der opaken Schicht angeordnet.

Das mindestens eine elektrisch leitfähige Element kann unabhängig voneinander beispielsweise als ein elektrisch heizbares Element, ein Feuchtigkeitssensor, ein Drucksensor, eine Antenne oder eine Leiterplatte, d.h. ein Träger für elektronische Leitungen und Komponenten, ausgebildet sein.

In einer bevorzugten Ausführungsform einer erfindungsgemäßen Verbundscheibe weist das funktionale Einlegelement mindestens zwei elektrisch leitfähige Elemente auf, die unterschiedlich strukturiert sind.

Beispiele für Antennen sind Antennen für *radio-frequency identification* (RFID), *radio detection and ranging* (RADAR), 5G, *Long Term Evolution* (LTE), *Global System for Mobile Communication* (GSM), *Global Positioning System* (GPS), Radio (FM, DAB), *Industrial, Scientific and Medical Band* (ISM-Bänder) und *Wireless Local Area Network* (WLAN).

Die erste Scheibe und die zweite Scheibe bestehen typischerweise aus Glas. Dabei kann die erste Scheibe die Außenscheibe und die zweite Scheibe die Innenscheibe der erfindungsgemäßen Verbundscheibe sein. Alternativ kann auch die zweite Scheibe die Außenscheibe und die erste Scheibe die Innenscheibe der erfindungsgemäßen Verbundscheibe sein. Die Verbundscheibe ist insbesondere eine Fahrzeug-Verbundscheibe und somit zur Abtrennung eines Fahrzeuginnenraums von einer äußeren Umgebung vorgesehen. Die Verbundscheibe ist also eine Fensterscheibe, die in eine Fensteröffnung der Fahrzeugkarosserie eingesetzt ist oder dafür vorgesehen ist. Die erfindungsgemäße Verbundscheibe ist insbesondere eine Windschutzscheibe eines Kraftfahrzeugs.

Mit Innenscheibe wird diejenige Scheibe bezeichnet, welche dafür vorgesehen ist, in Einbaulage dem Innenraum des Fahrzeugs zugewandt zu sein. Mit Außenscheibe wird diejenige Scheibe bezeichnet, welche dafür vorgesehen ist, in Einbaulage der äußeren Umgebung des Fahrzeugs zugewandt zu sein. Wie oben beschrieben kann bei der erfindungsgemäßen Verbundscheibe die erste Scheibe die Außenscheibe und die zweite Scheibe die Innenscheibe sein oder alternativ die zweite Scheibe die Außenscheibe und die erste Scheibe die Innenscheibe sein. Diejenige Oberfläche der jeweiligen Scheibe, welche in Einbaulage der äußeren Umgebung des Fahrzeugs zugewandt ist, wird als außenseitige Oberfläche bezeichnet. Diejenige Oberfläche der jeweiligen Scheibe, welche in Einbaulage dem Innenraum des Fahrzeugs zugewandt ist, wird als innenraumseitige Oberfläche bezeichnet.

Der Bereich der Verbundscheibe, der im Detektionsstrahlengang eines Sensors angeordnet ist beziehungsweise dafür vorgesehen ist, wird als Sensorbereich oder Sensorfenster bezeichnet. Strahlung, die im Sensorfenster durch die Verbundscheibe tritt, wird durch den Sensor detektiert.

Handelt es sich bei dem Sensor um eine Kamera, so kann der Bereich der Verbundscheibe, der im Detektionsstrahlengang der Kamera angeordnet ist beziehungsweise dafür vorgesehen ist, auch als Kamerabereich oder Kamerafenster bezeichnet werden. Strahlung, die im Kamerafenster durch die Verbundscheibe tritt, wird durch die Kamera detektiert.

In einer Ausführungsform einer erfindungsgemäßen Verbundscheibe umfasst die Trägerschicht des funktionalen Einlegeelements eine transparente Substratschicht und eine opake Schicht und die opake Schicht weist mindestens eine Aussparung auf, wobei die mindestens eine Aussparung bevorzugt ein Sensorfenster für einen optischen Sensor ist. Optional ist bei dieser Ausführungsform einer erfindungsgemäßen Verbundscheibe in Durchsicht mindestens im Bereich einer Aussparung ein als ein elektrisch heizbares Element ausgebildetes elektrisch leitfähiges Element angeordnet.

In einer alternativen Ausführungsform einer erfindungsgemäßen Verbundscheibe umfasst die Trägerschicht des funktionalen Einlegeelements eine transparente Substratschicht, die bereichsweise opak eingefärbt ist, wobei Bereiche, die in der fertigen Verbundscheibe ein Sensorfenster für einen optischen Sensor sind, nicht opak eingefärbt sind, d.h. transparent verbleiben. Optional ist bei dieser Ausführungsform einer erfindungsgemäßen Verbundscheibe in Durchsicht mindestens in einem Bereich, der nicht opak eingefärbt ist ein als ein elektrisch heizbares Element ausgebildetes elektrisch leitfähiges Element angeordnet.

Die erfindungsgemäße Verbundscheibe ist insbesondere dafür vorgesehen und geeignet, dass ein optischer Sensor an der Scheibe befestigt wird, die in Einbaulage die Innenscheibe darstellt. Dazu kann die innenraumseitige Oberfläche der Innenscheibe mit geeigneten Halterungen ausgestattet sein, beispielsweise mit einem *Bracket* oder Gehäuse.

Die an der Scheibe befestigten optischen Sensoren sind bevorzugt Kameras wie Videokameras oder Nachtsichtkameras, Regensensoren, Lichtsensoren, Abstandsmesser oder LI DAR (light detection and ranging) Systeme. Beim Vorhandensein von mehr als einem an der Scheibe befestigten optischen Sensor, kann die Art der einzelnen optischen Sensoren auch unterschiedlich sein.

In einer Ausführungsform einer erfindungsgemäßen Verbundscheibe umfasst die Trägerschicht des funktionalen Einlegeelements eine transparente Substratschicht und eine opake Schicht und die opake Schicht des funktionalen Einlegeelements weist mindestens eine Aussparung auf und die Verbundscheibe umfasst zusätzlich mindestens einen optischen Sensor, der an der innenraumseitigen Oberfläche der Innenscheibe befestigt ist und auf die mindestens eine Aussparung gerichtet ist. Der Sensor ist bevorzugt bei Durchsicht durch die Verbundscheibe von außen durch die opake Schicht verdeckt und somit von außen nicht sichtbar.

In einer alternativen Ausführungsform einer erfindungsgemäßen Verbundscheibe umfasst die Trägerschicht des funktionalen Einlegeelements eine transparente Substratschicht, die bereichsweise opak eingefärbt ist, wobei Bereiche, die in der fertigen Verbundscheibe ein Sensorfenster für einen optischen Sensor sind, nicht opak eingefärbt sind, und die Verbundscheibe umfasst zusätzlich mindestens einen optischen Sensor, der an der innenraumseitigen Oberfläche der Innenscheibe befestigt ist und auf einen Bereich, der nicht opak eingefärbt ist, gerichtet ist. Der Sensor ist bevorzugt bei Durchsicht durch die Verbundscheibe von außen durch die opake Einfärbung verdeckt und somit von außen nicht sichtbar.

Bevorzugt entspricht die Anzahl der Aussparungen in der opaken Schicht oder die Anzahl der Bereiche, die nicht opak eingefärbt ist, der Anzahl der an der Scheibe angebrachten optischen Sensoren, so dass jeweils ein solcher Sensor auf eine Aussparung oder einen solchen Bereich gerichtet ist. Es ist aber auch möglich, dass die Anzahl der Aussparungen oder Bereiche geringer als die Anzahl solcher Sensoren ist, so dass mehrere solcher Sensoren auf dieselbe Aussparung oder den selben Bereich gerichtet sind.

Die mindestens eine Aussparung oder der Bereich der nicht opak eingefärbt ist, kann trapezförmig sein. Eine trapezförmige Aussparung oder trapezförmiger nicht eingefärbter Bereich ist insbesondere als Sensorfenster für eine Kamera geeignet. Die mindestens eine Aussparung oder der nicht opak eingefärbte Bereich kann auch kreisförmig oder oval sein. Eine kreisförmige oder ovale Aussparung oder ein kreisförmiger oder ovaler Bereich, der nicht eingefärbt ist, ist insbesondere als Sensorfenster für einen Regensensor geeignet. Weist die opake Schicht mehr als eine Aussparung oder die Trägerschicht mehr als einen Bereich, der nicht opak eingefärbt ist, auf, so können diese auch verschiedene Formen haben.

Die Fläche der Aussparung oder die Fläche des Bereichs, der nicht opak eingefärbt ist, entspricht mindestens der Größe des für die jeweiligen Sensoren benötigten Sensorfensters, bevorzugt genau der Größe des für die jeweiligen Sensoren benötigten Sensorfensters. Die Aussparung oder der nicht opak eingefärbte Bereich hat bevorzugt eine Fläche von mindestens 1 cm², besonders bevorzugt von 1 cm² bis 500 cm², ganz besonders bevorzugt von 10 cm² bis 250 cm², insbesondere von 20 cm² bis 100 cm², beispielsweise 35 cm². Im Falle von mehr als einer Aussparung oder mehr als einem Bereich, der nicht opak eingefärbt ist, so können die Flächen dieser unterschiedlich sein.

In den Ausführungsformen der erfindungsgemäßen Verbundscheibe, in denen die opake Schicht mindestens eine Aussparung aufweist und in Durchsicht mindestens im Bereich einer Aussparung ein als ein elektrisch heizbares Element ausgebildetes elektrisch leitfähiges Element angeordnet ist, dient dieses elektrisch heizbare Element als Heizung für die Aussparung, bei der es sich bevorzugt um ein Sensorfenster handelt.

Durch eine lokale Anpassung der Dicke und Fläche des als elektrisch heizbares Element ausgebildetes elektrisch leitfähigen Elements lässt sich die Heizleistung anpassen.

Die erste Scheibe, die zweite Scheibe und die mindestens eine thermoplastische Zwischenschicht weisen üblicherweise dieselben Abmessungen auf.

Bevorzugt ist das funktionale Einlegeelement von den Abmessungen her kleiner als die erste Scheibe, die zweite Scheibe und die mindestens eine thermoplastische Zwischenschicht. Beispielsweise bedeckt das funktionale Einlegeelement die Scheiben nur teilweise. Die Fläche des Einlegeelements beträgt in einer Ausführungsform maximal 95 %, bevorzugt maximal 75 %, besonders bevorzugt maximal 50 %, ganz besonders bevorzugt maximal 10 % der Fläche der Verbundscheibe.

Die transparente Substratschicht und, sofern vorhanden, die opake Schicht des funktionalen Einlegeelements haben im Wesentlichen die gleichen äußeren Abmessungen. Sie erstrecken sich somit im Wesentlichen über die gesamte Länge und Breite des Einlegeelements bis auf die Bereiche in denen die opake Schicht des funktionalen Einlegeelements Aussparungen aufweist.

"Im Wesentlichen gleiche äußeren Abmessungen" bedeutet, dass die äußeren Abmessungen zweier Materialien um maximal 5 %, bevorzugt um 3 %, besonders bevorzugt um maximal 2 % voneinander abweichen.

Das mindestens eine elektrisch leitfähige Element erstreckt sich nur abschnittsweise in dem funktionale Einlegeelement.

Weist das funktionale Einlegeelement beispielsweise nur ein elektrisch leitfähiges Element auf, das in Form einer elektrisch beheizbaren Schicht oder Beschichtung ausgebildet ist, so erstreckt sich diese elektrisch beheizbare Schicht oder Beschichtung nicht vollflächig in dem funktionalen Einlegeelement, d.h. die elektrisch beheizbare Schicht oder Beschichtung ist nicht vollflächig oder im Wesentlichen vollflächig auf der transparenten Substratschicht oder zwischen der der transparenten Substratschicht und der opaken Schicht angeordnet.

In der Ausführungsform, in der die transparente Substratschicht zumindest bereichsweise opak eingefärbt ist, ist die elektrisch beheizbare Schicht oder Beschichtung ebenfalls nicht vollflächig auf der zumindest bereichsweise opak eingefärbten transparenten Substratschicht angeordnet.

In einer bevorzugten Ausführungsform enthält die opake Schicht des funktionalen Einlegeelements Polyethylenterephthalat (PET) oder Polyethylen (PE), insbesondere PET. In einer besonders bevorzugten Ausführungsform besteht die opake polymere Schicht des funktionalen Einlegeelements aus Polyethylenterephthalat (PET) oder Polyethylen (PE), insbesondere aus PET.

Es versteht sich, dass die opake Schicht auch als eine opake Beschichtung der transparenten Substratschicht ausgebildet sein kann. Dem Fachmann sind geeignete opake Beschichtungen und Druckverfahren zur Auftragung der opaken Beschichtung auf die Substratschicht bekannt.

Die opake Schicht ist bevorzugt zwischen 10 µm (Mikrometer) und 200 µm, besonders bevorzugt zwischen 100 µm und 200 µm, ganz besonders bevorzugt zwischen 125 µm und 180 µm dick. In bevorzugten Ausführungsformen ist die opake Schicht 125 µm oder 150 µm dick.

In einer bevorzugten Ausführungsform enthält die transparente Substratschicht des funktionalen Einlegeelements ein Thermoplast oder ein Duroplast oder besteht daraus. Alternativ kann die transparente Substratschicht auch eine Glasschicht mit einer Dicke von kleiner oder gleich 0,5 mm, bevorzugt kleiner gleich 0,2 mm, besonders bevorzugt kleiner gleich 0,1 mm sein.

Bevorzugt enthält die transparente Substratschicht Ethylenvinylacetat (EVA), Polyvinylbutyral (PVB), Polyurethan (PU), Polyethylenterephthalat (PET), Polyethylen (PE) oder Polyester oder Gemische oder Copolymere oder Derivate davon oder besteht daraus. Besonders bevorzugt enthält die transparente Substratschicht Polyethylenterephthalat (PET) oder besteht daraus.

Die transparente Substratschicht ist bevorzugt zwischen 10 µm und 500 µm, besonders bevorzugt zwischen 50 µm und 200 µm, ganz besonders bevorzugt zwischen 80 µm und 125 µm dick. Die transparente Substratschicht ist beispielsweise 50 µm oder 100 µm dick.

Wie oben erläutert kann die transparente Substratschicht bereichsweise opak eingefärbt sein.

Das mindestens eine elektrisch leitfähige Element kann eine elektrisch beheizbare Beschichtung, eine Kohlenstoff enthaltende Schicht, oder eine metallische Schicht sein.

Alternativ kann das mindestens eine elektrisch leitfähige Element ein leitfähiges Polymer enthalten oder daraus bestehen. Dem Fachmann ist bekannt, welche Materialien sich als elektrisch leitfähige Elemente eignen. Beispielsweise kann das mindestens eine elektrisch leitfähige Element eine Indium-Zinn-Oxid (ITO) Schicht oder Beschichtung, eine Silber oder silberhaltige Legierung enthaltende Schicht oder Beschichtung, eine Gold, Aluminium oder Wolfram enthaltende Schicht oder Beschichtung, eine Graphite enthaltende Schicht oder Beschichtung oder Graphen sein. Beispiele für leitfähige und somit beheizbare Polymere sind Poly-3,4-ethylendioxythiophen (PEDOT) mit Polystyrolsulfonat (PSS) als Gegenion, dotiertes Polyacetylen (PAC) und Polyanilin (PAni).

Das elektrisch leitfähige Element ist bevorzugt zwischen 5 µm und 50 µm, besonders bevorzugt zwischen 5 µm und 20 µm, ganz besonders bevorzugt zwischen 8 µm und 15 µm dick. Ist das elektrisch leitfähige Element beispielsweise als eine elektrisch beheizbare Schicht ausgebildet, so ist es beispielsweise 10 µm dick. Das elektrisch leitfähige Element muss nicht zwingend über seine gesamte Fläche eine konstante Dicke aufweisen. Über die Variation der Dicke und die Strukturierung des elektrisch leitfähigen Elements lassen sich die funktionalen Eigenschaften des elektrisch leitfähigen Elements beeinflussen.

In Ausführungsformen, in denen das elektrisch leitfähige Element als Beschichtung auf die transparente Substratschicht aufgebracht ist, ist das elektrisch leitfähige Element bevorzugt zwischen 10 nm und 5000 nm, bevorzugt zwischen 10 nm und 100 nm dick.

In bevorzugten Ausführungsformen ist die opake Schicht oder der opak eingefärbte Bereich der transparenten Substratschicht zumindest abschnittsweise durchlässig für Infrarotstrahlung mit einer Wellenlänge im Bereich zwischen 800 nm und 1100 nm. In diesen Ausführungsformen ist die opake Schicht oder der opak eingefärbte Bereich der transparenten Substratschicht somit zumindest abschnittsweise transparent für die Strahlung von Infrarot- oder light detection and ranging (LiDaR) Sensoren.

Die mindestens eine thermoplastische Zwischenschicht enthält bevorzugt Ethylenvinylacetat (EVA), Polyvinylbutyral (PVB) oder Polyurethan (PU) oder Gemische oder Copolymere oder Derivate davon, besonders bevorzugt PVB. Die Dicke der thermoplastischen Zwischenschicht beträgt bevorzugt von 0,2 mm bis 2 mm, besonders bevorzugt von 0,3 mm bis 1 mm, beispielsweise 0,38 mm oder 0,76 mm. Umfasst die Verbundscheibe zwei oder mehr thermoplastische Zwischenschichten, so können die einzelnen Zwischenschichten auch unterschiedlichen Materials sein.

In einer Ausführungsform umfasst die Verbundscheibe eine erste Scheibe und eine zweite Scheibe, die über genau eine thermoplastische Zwischenschicht miteinander verbunden sind. In diesem Fall ist das funktionale Einlegeelement zwischen der ersten Scheibe und der thermoplastischen Zwischenschicht oder zwischen der zweiten Scheibe und der thermoplastischen Zwischenschicht angeordnet.

In einer weiteren Ausführungsform umfasst die Verbundscheibe eine erste Scheibe und eine zweite Scheibe, die über mindestens zwei thermoplastische Zwischenschichten miteinander verbunden sind. In diesem Fall ist das funktionale Einlegeelement bevorzugt zwischen zwei der thermoplastischen Zwischenschichten angeordnet.

In einer bevorzugten Ausführungsform einer erfindungsgemäßen Verbundscheibe ist die opake Schicht oder der opak eingefärbte Bereich der transparenten Substratschicht schwarz. Die opake Schicht oder der opak eingefärbte Bereich der transparenten Substratschicht kann aber auch jede andere Farbe haben. Die opake Schicht kann eine durchgefärbte Schicht sein oder als eine bedruckte Schicht oder eine opake Beschichtung realisiert werden.

Eine erfindungsgemäße Verbundscheibe kann zusätzlich einen Abdeckdruck, insbesondere aus einer dunklen, bevorzugt schwarzen, Emaille umfassen. Bevorzugt haben die opake Schicht oder der opak eingefärbte Bereich der transparenten Substratschicht und der Abdeckdruck im Wesentlichen die gleiche optische Dichte. Bei dem Abdeckdruck handelt es sich insbesondere um einen peripheren, d.h. rahmenartigen, Abdeckdruck. Der periphere Abdeckdruck dient in erster Linie als UV-Schutz für den Montagekleber der Verbundscheibe. Der Abdeckdruck kann opak und vollflächig ausgebildet sein. Der Abdeckdruck kann zumindest abschnittsweise auch semitransparent, beispielsweise als Punktraster, Streifenraster oder kariertes Raster ausgebildet sein. Alternativ kann der Abdeckdruck auch einen Gradienten aufweisen, beispielsweise von einer opaken Bedeckung zu einer semitransparenten Bedeckung.

Eine "im Wesentlichen gleiche optische Dichte" bedeutet, dass die optischen Dichten zweier Materialien um maximal 5 %, bevorzugt um 3 %, besonders bevorzugt um maximal 2 % voneinander abweichen.

In einer bevorzugten Ausführungsform einer erfindungsgemäßen Verbundscheibe umfasst diese einen Abdeckdruck, der die gleiche Farbe wie die opake Schicht oder der opak eingefärbte Bereich der transparenten Substratschicht hat.

Der Abdeckdruck ist üblicherweise auf der innenraumseitigen Oberfläche derjenigen Scheibe, die in Einbaulage die Außenscheibe darstellt, oder auf der innenraumseitigen Oberfläche derjenigen Scheibe, die in Einbaulage die Innenscheibe darstellt, aufgebracht.

In einer Ausführungsform umfasst die Verbundscheibe eine erste Scheibe und eine zweite Scheibe, die über genau eine thermoplastische Zwischenschicht miteinander verbunden sind und ein Abdeckdruck ist auf der Außenscheibe aufgebracht. In diesem Fall ist das funktionale Einlegeelement bevorzugt zwischen der Außenscheibe und der thermoplastischen Zwischenschicht angeordnet und in den Ausführungsformen, in denen die Trägerschicht eine transparente Substratschicht und eine opake Schicht umfasst, ist die opake Schicht besonders bevorzugt direkt benachbart zur Außenscheibe angeordnet.

In einer weiteren Ausführungsform umfasst die Verbundscheibe eine erste Scheibe und eine zweite Scheibe, die über genau eine thermoplastische Zwischenschicht miteinander verbunden sind und ein Abdeckdruck ist auf der innenraumseitigen Oberfläche der Innenscheibe aufgebracht. In diesem Fall ist das funktionale Einlegeelement bevorzugt zwischen der Innenscheibe und der thermoplastischen Zwischenschicht angeordnet und in den Ausführungsformen, in denen die Trägerschicht eine transparente Substratschicht und eine opake Schicht umfasst, ist die opake Schicht des funktionalen Einlegeelements besonders bevorzugt direkt benachbart zur thermoplastischen Zwischenschicht angeordnet.

In einer weiteren Ausführungsform umfasst die Verbundscheibe eine erste Scheibe und eine zweite Scheibe, die über zwei thermoplastische Zwischenschichten miteinander verbunden sind und ein Abdeckdruck ist auf der innenraumseitigen Oberfläche der Innenscheibe aufgebracht. In diesem Fall ist das funktionale Einlegeelement bevorzugt zwischen der Innenscheibe und der der Innenscheibe benachbarten thermoplastischen Zwischenschicht oder zwischen den beiden thermoplastischen Zwischenschichten angeordnet.

In einer weiteren Ausführungsform umfasst die Verbundscheibe eine erste Scheibe und eine zweite Scheibe, die über zwei thermoplastische Zwischenschichten miteinander verbunden sind und ein Abdeckdruck ist auf der innenraumseitigen Oberfläche der Außenscheibe aufgebracht. In diesem Fall ist das funktionale Einlegeelement bevorzugt zwischen der Außenscheibe und der der Außenscheibe benachbarten thermoplastischen Zwischenschicht oder zwischen den beiden thermoplastischen Zwischenschichten angeordnet.

Bevorzugt ist das funktionale Einlegeelement derart zwischen der ersten Scheibe und der zweiten Scheibe angeordnet, dass in den Ausführungsformen, in denen die Trägerschicht eine transparente Substratschicht und eine opake Schicht umfasst, die opake Schicht des funktionalen Einlegeelements möglichst unmittelbar benachbart zu der Scheibe, auf der der Abdeckdruck aufgebracht ist, angeordnet ist. Bei einer derartigen Anordnung sind bei Draufsicht von außen, die Zuleitungen und Anschlüsse des mindestens einen elektrisch leitfähigen Elements durch die opake Schicht verdeckt. Alternativ können die Zuleitungen und Anschlüsse auch weitestgehend oder vollständig in die opake Schicht eingebettet sein.

Die erste Scheibe, die zweite Scheibe oder die thermoplastische Zwischenschicht können klar und farblos, aber auch getönt, getrübt oder gefärbt sein. Die Gesamttransmission durch die Verbundscheibe beträgt in einer bevorzugten Ausgestaltung größer 70%, insbesondere wenn die Verbundscheibe eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die erste Scheibe und die zweite Scheibe können aus nicht vorgespanntem, teilvorgespanntem oder vorgespanntem Glas bestehen. Die Dicke der ersten Scheibe und der zweiten Scheibe beträgt typischerweise von 0,3 mm bis 5 mm, bevorzugt von 1 mm bis 3 mm, beispielsweise 2,1 mm.

Die Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Das Verbundglas kann aber auch plan sein, beispielsweise wenn es als Scheibe für Busse, Züge oder Traktoren vorgesehen ist.

Bevorzugt ist das funktionale Einlegeelement in einer oberen Hälfte, besonders bevorzugt in einem oberen Drittel, ganz besonders bevorzugt in einem oberen Viertel der Verbundscheibe angeordnet. Bevorzugt ist das funktionale Einlegeelement in horizontaler Richtung im Wesentlichen mittig der Verbundscheibe angeordnet.

In einer bevorzugten Ausführungsform ist die Verbundscheibe eine Fahrzeug-Verbundscheibe, insbesondere eine Windschutzscheibe.

In einer Ausführungsform ist die Verbundscheibe eine Windschutzscheibe, die entlang einer Mittellinie spiegelsymmetrisch ist und das funktionale Einlegeelement ist auf der Mittellinie in der Nähe der Oberkante der Windschutzscheibe angeordnet.

In der Nähe der Oberkante bedeutet insbesondere, dass der Abstand zwischen dem funktionalen Einlegeelement und der Oberkante maximal 30 mm, bevorzugt maximal 20 mm, besonders bevorzugt maximal 15 mm, ganz besonders bevorzugt maximal 10 mm beträgt.

Das mindestens eine elektrisch leitfähige Element kann mit einer Spannungsquelle verbunden sein. Dabei kann jedes elektrisch leitfähige Element mit einer eigenen Spannungsquelle verbunden sein oder mehrere elektrisch leitfähige Elemente mit derselben Spannungsquelle verbunden sein.

Als Zuleitung zur Kontaktierung von elektrisch leitfähigen Elementen im Innern von Verbundscheiben werden im Fahrzeugbereich üblicherweise Folienleiter verwendet. Beispiele für Folienleiter werden in DE 42 35 063 A1, DE 20 2004 019 286 U1 und DE 93 13 394 U1 beschrieben.

Gezeigt ist auch eine Anordnung, umfassend eine erfindungsgemäße Verbundscheibe und einen daran angebrachten optischen Sensor, der an der von der Zwischenschicht abgewandten, innenraumseitigen Oberfläche der Innenscheibe befestigt ist.

In einer Ausführungsform dieser Anordnung weist die Trägerschicht des funktionalen Einlegeelements eine transparente Substratschicht und eine opake Schicht auf und die opake Schicht weist eine Aussparung auf und der optische Sensor ist auf den Bereich der Aussparung, d.h. das Sensorfenster der Verbundscheibe gerichtet. Der Detektionsstrahlengang des Sensors verläuft folglich durch die Aussparung in der opaken Schicht hindurch. Der optische Sensor ist bevorzugt eine optische Kamera, das heißt eine Kamera mit Empfindlichkeit im sichtbaren Spektralbereich, beispielsweise eine FahrspurKamera oder eine Kamera für ein *Augmented* Reality-Head-Up-Display.

In einer weiteren Ausführungsform dieser Anordnung weist die Trägerschicht des funktionalen Einlegeelements eine transparente Substratschicht und eine opake Schicht auf und die opake Schicht ist zumindest abschnittsweise durchlässig für Infrarotstrahlung mit einer Wellenlänge im Bereich zwischen 800 nm und 1100 nm und der optische Sensor ist ein Infrarot- oder light detection and ranging (LiDaR) Sensor, der auf den Abschnitt, der durchlässig für Infrarotstrahlung mit einer Wellenlänge im Bereich zwischen 800 nm und 1100 nm ist, gerichtet ist. Der Detektionsstrahlengang des Sensors verläuft folglich durch den Abschnitt in der opaken Schicht, der durchlässig für Infrarotstrahlung mit einer Wellenlänge im Bereich zwischen 800 nm und 1100 nm ist, hindurch.

Die Erfindung betrifft auch ein Verfahren zur Herstellung einer erfindungsgemäßen Verbundscheibe, mindestens umfassend die folgenden Schritte:
(a) Bereitstellen einer ersten Scheibe, einer zweiten Scheibe, mindestens einer thermoplastischen Zwischenschicht und eines funktionalen Einlegeelements, mindestens umfassend eine Trägerschicht und mindestens ein elektrisch leitfähiges Element;
(b) Anordnen der mindestens einen thermoplastischen Zwischenschicht und des funktionalen Einlegeelements zwischen der ersten Scheibe und der zweiten Scheibe; und
(c) Verbinden der ersten Scheibe mit der zweiten Scheibe über die mindestens eine thermoplastische Zwischenschicht durch Lamination.

Die Bereitstellung des funktionalen Einlegeelements, d.h. die Anordnung der Trägerschicht und des mindestens einen elektrisch leitfähigen Elements des funktionalen Einlegeelements kann manuell oder maschinell, beispielsweise mittels eines Roboters, erfolgen. Entsprechende funktionale Einlegeelemente können vorgefertigt und getestet werden und dann bei der Produktion der Verbundscheibe in der Verbinderlinie zwischen der ersten und der zweiten Scheibe angeordnet werden.

Das funktionale Einlegeelement ist wie in den oben beschriebenen verschiedenen Ausführungsformen ausgebildet.

Das mindestens eine elektrisch leitfähige Element kann beispielsweise mittels Lasertechniken, Schneidverfahren, Druckverfahren, Ätzverfahren, Klebeverfahren, chemische Gasphasenabscheidung (CVD), physikalische Gasphasenabscheidung (PVD) oder Atomlagenabscheidung (ALD) prozessiert werden.

Das erfindungsgemäße Verfahren bietet gegenüber Verfahren aus dem Stand der Technik den Vorteil, dass mittels eines Arbeitsschrittes, d.h. dem Einlegen eines funktionalen Einlegeelements, mehrere Funktionen, wie beispielsweise Sensoren, Antennen und heizbare Bereiche in die Verbundscheibe eingebracht werden können. Dies führt zu einer Zeit- und Kostenersparnis.

Die Anordnung des funktionalen Einlegeelements zwischen der ersten Scheibe und der zweiten Scheibe kann manuell oder maschinell, beispielsweise mittels eines Roboters, erfolgen.

Soll die Verbundscheibe eine Biegung aufweisen, wie insbesondere für Personenkraftwagen üblich, so werden die Scheiben vor dem Laminieren einem Biegeprozess unterzogen, beispielsweise durch Schwerkraftbiegen, Saugbiegen und/oder Pressbiegen. Typische Biegetemperaturen betragen von 500°C bis 700°C.

Bevorzugt wird vor dem Laminieren und vor dem optionalen Biegen ein opaker Abdeckdruck insbesondere auf den Randbereich der ersten Scheibe und/oder der zweiten Scheibe aufgebracht. Dazu wird typischerweise eine schwarze oder dunkle Emaille per Siebdruck aufgebracht und vor dem Laminieren, insbesondere vor dem Biegen oder während des Biegens, eingebrannt.

Die vorstehend im Zusammenhang mit der Verbundscheibe beschriebenen Ausgestaltungen gelten in gleicher Weise für das erfindungsgemäße Verfahren.

Die Erfindung betrifft auch die Verwendung einer erfindungsgemäßen Verbundscheibe als Fahrzeugscheibe, bevorzugt als Windschutzscheibe eines Kraftfahrzeugs.

Die verschiedenen Ausgestaltungen der Erfindung können einzeln oder in beliebigen Kombinationen realisiert sein. Insbesondere sind die vorstehend genannten und nachstehend erläuterten Merkmale nicht nur in den angegebenen Kombinationen, sondern auch in anderen Kombinationen oder in Alleinstellung einsetzbar, ohne den Rahmen der vorliegenden Erfindung zu verlassen.

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein.

Es zeigen:
- Fig. 1: eine Draufsicht auf eine Ausgestaltung der erfindungsgemäßen Verbundscheibe,
- Fig. 2: einen Querschnitt durch die erfindungsgemäße Verbundscheibe der Fig. 1 entlang der Mittellinie M,
- Fig. 3: eine Draufsicht auf eine Ausführungsform eines funktionalen Einlegeelements,
- Fig. 4: eine Draufsicht auf eine Ausführungsform eines funktionalen Einlegeelements,
- Fig. 5: einen Querschnitt durch eine Ausführungsform eines Einlegeelements,
- Fig. 6: einen weiteren Querschnitt durch eine Ausführungsform eines funktionalen Einlegeelements,
- Fig. 7: einen weiteren Querschnitt durch eine Ausführungsform eines funktionalen Einlegeelements,
- Fig. 8: einen weiteren Querschnitt durch eine Ausführungsform eines funktionalen Einlegeelements,
- Fig. 9: einen weiteren Querschnitt durch eine Ausführungsform eines funktionalen Einlegeelements,
- Fig. 10: einen weiteren Querschnitt durch eine Ausführungsform eines funktionalen Einlegeelements,
- Fig. 11: eine Draufsicht auf eine weitere Ausgestaltung der erfindungsgemäßen Verbundscheibe,
- Fig. 12: einen Querschnitt durch eine weitere Ausführungsform einer erfindungsgemäßen Verbundscheibe entlang der Mittellinie M,
- Fig. 13: ein Flussdiagramm einer Ausführungsform des erfindungsgemäßen Verfahrens.

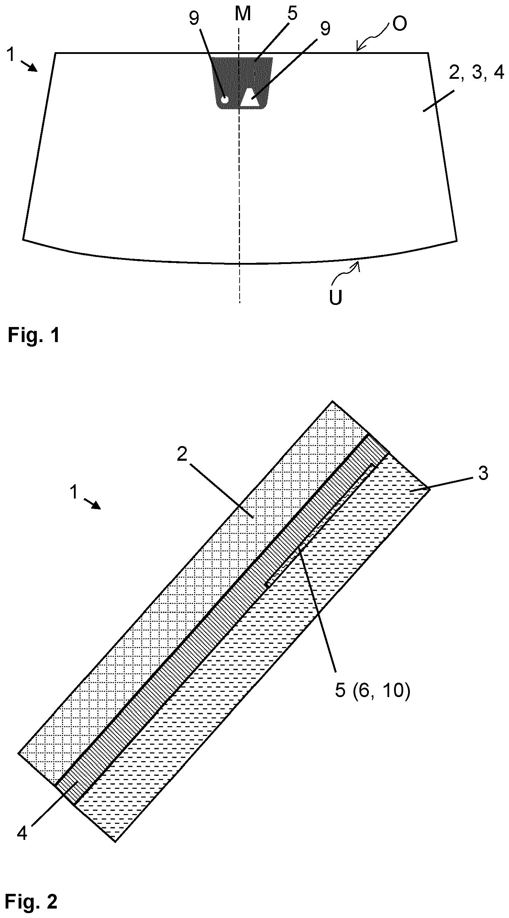

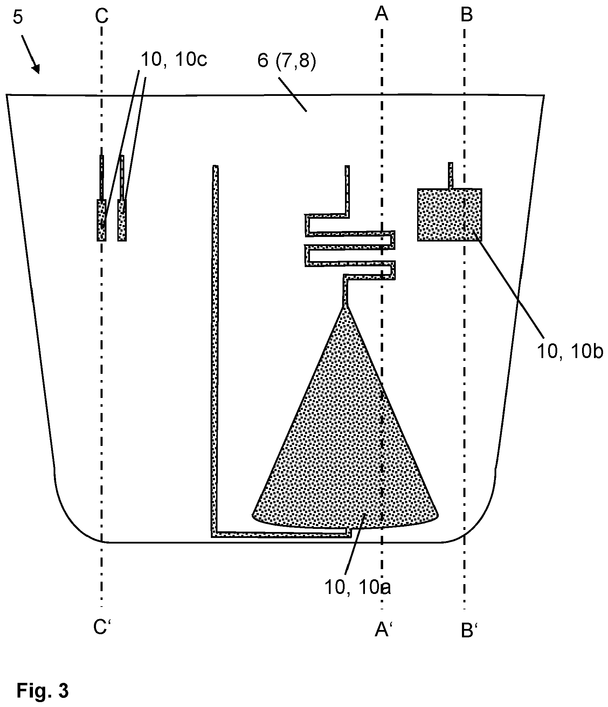

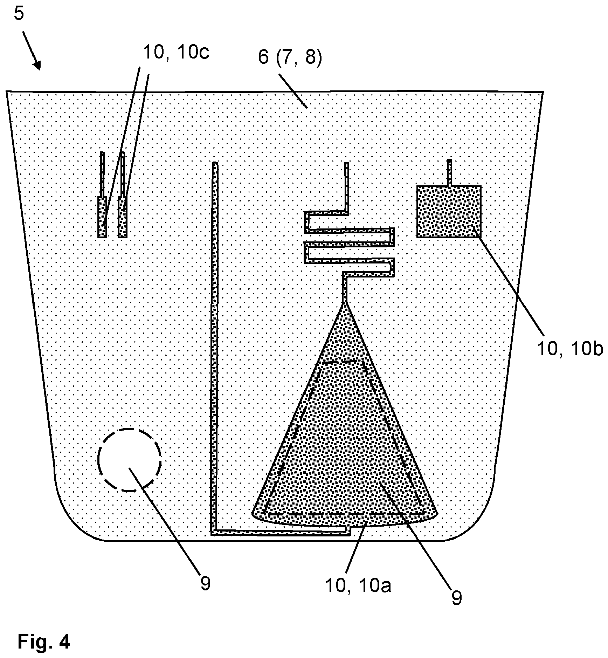

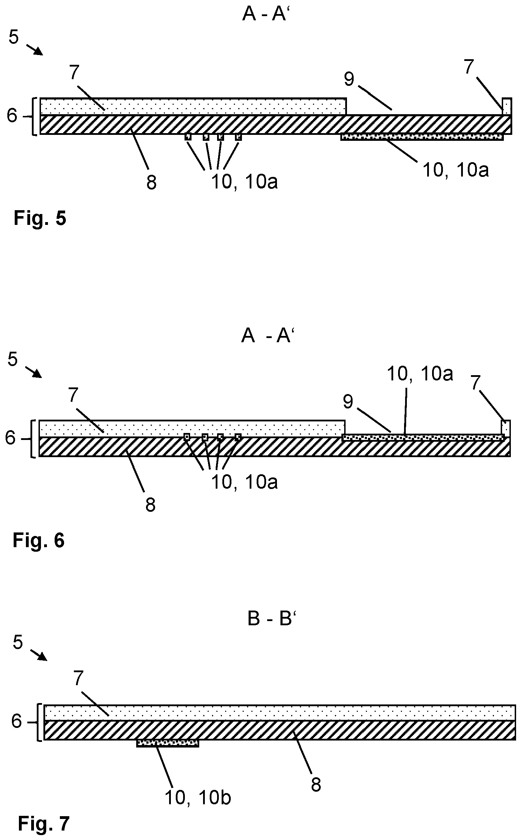

Fig. 1 zeigt eine Ausführungsform der erfindungsgemäßen Verbundscheibe 1 und in der Fig. 2 ist der Querschnitt durch die erfindungsgemäße Verbundscheibe 1 gemäß Fig. 1 entlang der Mittellinie M gezeigt. Die in der Fig. 1 gezeigte Verbundscheibe 1 ist entlang der Mittellinie M spiegelsymmetrisch und das funktionale Einlegeelement 5 ist auf der Mittellinie in der Nähe der Oberkante O angeordnet. In der in Fig. 1 und 2 gezeigten Ausführungsform umfasst die Verbundscheibe 1 eine erste Scheibe 2 und eine zweite Scheibe 3, die über eine thermoplastische Zwischenschicht 4 flächig miteinander verbunden sind. In der in den Fig. 1 und 2 gezeigten Ausführungsform ist die erste Scheibe 2 die Außenscheibe und die zweite Scheibe 3 die Innenscheibe. Die erste Scheibe 2 und die zweite Scheibe 3 bestehen aus Kalk-Natron-Glas und weisen beispielsweise eine Dicke von 2,1 mm auf. Zwischen der zweiten Scheibe 3 und der thermoplastischen Zwischenschicht 4 ist ein funktionales Einlegelement 5 angeordnet. In der in der Fig. 1 und 2 gezeigten Ausführungsform ist das funktionale Einlegelement 5 zwischen der zweiten Scheibe 3 und der thermoplastischen Zwischenschicht 4 angeordnet. Das funktionale Einlegeelement 5 kann aber auch zwischen der ersten Scheibe 2 und der thermoplastischen Zwischenschicht 4 angeordnet sein. Zudem kann die erfindungsgemäße Verbundscheibe 1 auch mehr als eine thermoplastische Zwischenschicht 4 umfassen. Die thermoplastische Zwischenschicht 4 besteht in der in den Fig. 1 und 2 gezeigten Ausführungsform aus Polyvinylbutyral (PVB) und ist 0,76 mm dick. Das funktionale Einlegeelement 5 weist in der in der Fig. 1 und 2 gezeigten Ausführungsform eine trapezförmige Form, bei der die zur Unterkante weisenden Ecken abgerundet sind, auf. Es ist aber auch jede andere für die Abdeckung von Sensoren geeignete äußere Form des funktionalen Einlegeelements 5 möglich. Das funktionale Einlegeelement 5 umfasst eine Trägerschicht 6 und mindestens ein elektrisch leitfähiges Element 10 und ist beispielsweise wie in den Fig. 3 und 4 in Draufsicht und den Fig. 6, 8 und 10 im Querschnitt gezeigt aufgebaut.

Die Verbundscheibe 1 weist eine Oberkante O und eine Unterkante U auf. Die Oberkante O weist in Einbaulage nach oben zum Fahrzeugdach, die Unterkante U weist in Einbaulage nach unten zum Motorraum. Die innenraumseitige Oberfläche der Außenscheibe (erste Scheibe 2) ist über die thermoplastische Zwischenschicht 4 mit der außenseitigen Oberfläche der Innenscheibe (zweite Scheibe 3) verbunden. Üblicherweise wird die außenseitige Oberfläche der Außenscheibe als "Seite I" bezeichnet, die innenraumseitige Oberfläche der Außenscheibe als "Seite II", die außenseitige Oberfläche der Innenscheibe als "Seite III" und die innenraumseitige Oberfläche der Innenscheibe als "Seite IV".

Fig. 3 und 4 zeigen die Draufsicht auf eine Ausführungsform eines funktionalen Einlegeelements 5. In der dargestellten Ausführungsform umfasst die Trägerschicht 6 eine transparente Substratschicht 8 und eine opake Schicht 7. Die transparente Substratschicht 8 und die opake Schicht 7 sind in der gezeigten Ausführungsform vollflächig aufeinander angeordnet. In der Fig. 3 ist die opake Schicht 7 durchsichtig dargestellt, zur besseren Darstellung der elektrisch leitfähigen Elemente 10. In der Fig. 4 ist die opake Schicht 7 gepunktet dargestellt wodurch erkennbar ist, dass die opake Schicht 7 zwei Aussparungen 9 aufweist, die als Sensorfenster geeignet sind. In der in der Fig. 4 gezeigten Ausgestaltung ist die eine Aussparung kreisrund und die andere Aussparung ist trapezförmig. Es ist aber auch jede andere für ein Sensorfenster geeignete Form möglich. In der in den Fig. 3 und 4 in Draufsicht gezeigte Ausführungsform eines funktionalen Einlegeelements 5 weist das funktionale Einlegeelement 5 vier elektrisch leitfähige Elemente 10 auf. Es ist aber auch möglich, dass das funktionale Einlegeelement mehr oder weniger elektrisch leitfähige Elemente 10 aufweist. Die elektrisch leitfähigen Elemente 10 sind in der Fig. 3 und 4 zur besseren Darstellung gemustert dargestellt. Eines dieser elektrisch leitfähigen Elemente 10 ist als ein heizbares Element 10a ausgebildet mit einem ein Wesentlichen dreieckigen Bereich mit zwei davon abgehenden Leitungen. Ein weiteres dieser elektrisch leitfähigen Elemente 10 ist als eine Antenne 10b, beispielsweise eine GPS Antenne, mit einem im Wesentlichen quadratischen Bereich mit einer davon abgehenden Leitung ausgebildet. Zwei weitere dieser elektrisch leitfähigen Elemente 10 sind zusammen ein Feuchtigkeitssensor 10c, der als zwei im Wesentlichen rechteckigen Bereichen mit jeweils einer davon abgehenden Leitung ausgebildet ist. Wie aus der Fig. 4 ersichtlich ist, ist der im Wesentlichen dreieckige Bereich des heizbaren Elements 10a geringfügig größer als die trapezförmige Aussparung 9 und die trapezförmige Aussparung 9 liegt in Durchsicht vollständig innerhalb des dreieckigen Bereichs des heizbaren Elements 10a.

In der Fig. 5 ist der Querschnitt durch eine Ausführungsform eines funktionalen Einlegeelements 5 gezeigt. Der Querschnitt verläuft entlang der Schnittlinie A-A' durch die in den Fig. 3 und 4 gezeigte Ausführungsform eines funktionalen Einlegeelements 5. In der in der Fig. 5 gezeigten Ausgestaltung umfasst die Trägerschicht 6 eine transparente Substratschicht 8 und eine opake Schicht 7. Alternativ ist aber auch möglich, dass die Trägerschicht 6 als eine transparente Substratschicht 8, die in Bereichen opak eingefärbt ist, ausgebildet ist. Beispielsweise könnten die Bereiche transparenten Substratschicht, auf denen in der in der Fig. 5 gezeigten Ausführungsform eine opake Schicht 7 angeordnet ist alternativ auch opak eingefärbt sein, so dass eine separate opake Schicht 7 in dieser Ausführungsform nicht notwendig ist. In der in der Fig. 5 gezeigten Ausführungsform ist das elektrisch leitfähige Element 10, das als heizbares Element 10a ausgeformt ist, auf der transparenten Substratschicht 8 angeordnet, wobei das elektrisch leitfähige Element 10 auf derjenigen Oberfläche der transparenten Substratschicht 8 angeordnet ist, die nicht direkt benachbart zur opaken Schicht 7 ist. Die opake Schicht 7 weist eine Aussparung 9 auf und die Aussparung 9 liegt in Durchsicht vollständig innerhalb des dreieckigen Bereichs des heizbaren Elements 10a. In der in der Fig. 5 gezeigten Ausführungsform ist beispielsweise die transparente Substratschicht 8 eine PET-Folie mit einer Dicke von 100 µm, die opake polymere Schicht 7 eine PET-Folie mit einer Dicke von 125 µm und das als heizbares Element 10a ausgeformte elektrisch leitfähige Element 10 eine auf die transparente Substratschicht 8 aufgebrachte ITO-Beschichtung mit einer Dicke von 10 µm.

In der Fig. 6 ist der Querschnitt durch eine weitere Ausführungsform eines funktionalen Einlegeelements 5 gezeigt. Der Querschnitt verläuft entlang der Schnittlinie A-A' durch die in den Fig. 3 und 4 gezeigte Ausführungsform eines funktionalen Einlegeelements 5. Das in der Fig. 6 im Querschnitt gezeigte funktionale Einlegeelement 5 unterscheidet sich von dem in der Fig. 5 dargestellten nur dahingehend, dass das als heizbares Element 10a ausgeformte elektrisch leitfähige Element 10 zwischen der transparenten Substratschicht 8 und der opaken Schicht 7 angeordnet ist. In der in der Fig. 6 gezeigten Ausführungsform ist beispielsweise die transparente Substratschicht 8 eine PET-Folie mit einer Dicke von 100 µm, und die opake Schicht 7 eine PET-Folie mit einer Dicke von 125 µm und das als heizbares Element 10a ausgeformte elektrisch leitfähige Element 10 ein elektrisch leitfähiges Polymer, wie beispielsweise Polyanilin mit einer Dicke von 20 µm.

In der Fig. 7 ist der Querschnitt durch eine weitere Ausführungsform eines funktionalen Einlegeelements 5 gezeigt. Der Querschnitt verläuft entlang der Schnittlinie B-B' durch die in den Fig. 3 und 4 gezeigte Ausführungsform eines funktionalen Einlegeelements 5. In der in der Fig. 7 gezeigten Ausgestaltung ist das elektrisch leitfähige Element 10, das als Antenne 10b, beispielsweise GPS-Antenne, ausgeformt ist, auf der transparenten Substratschicht 8 angeordnet, wobei das elektrisch leitfähige Element 10 auf derjenigen Oberfläche der transparenten Substratschicht 8 angeordnet ist, die nicht direkt benachbart zur opaken Schicht 7 ist. In der in der Fig. 7 gezeigten Ausführungsform ist beispielsweise die transparente Substratschicht 8 eine PET-Folie mit einer Dicke von 100 µm, die opake Schicht 7 eine PET-Folie mit einer Dicke von 125 µm und das als Antenne 10c ausgeformte elektrisch leitfähige Element 10 eine auf die transparente Substratschicht 8 aufgebrachte ITO-Beschichtung mit einer Dicke von 10 µm. Alternativ ist aber auch möglich, dass die Trägerschicht 6 als eine transparente Substratschicht 8, die in Bereichen opak eingefärbt ist, ausgebildet ist. Beispielsweise könnten die Bereiche der transparenten Substratschicht, auf denen in der in der Fig. 7 gezeigten Ausführungsform eine opake Schicht 7 angeordnet ist alternativ auch opak eingefärbt sein, so dass eine separate opake Schicht 7 in dieser Ausführungsform nicht notwendig ist.

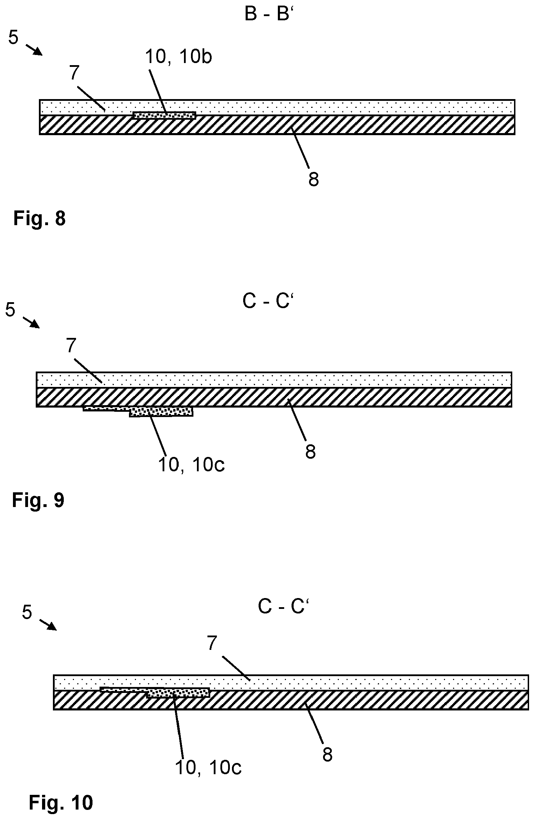

In der Fig. 8 ist der Querschnitt durch eine weitere Ausführungsform eines funktionalen Einlegeelements 5 gezeigt. Der Querschnitt verläuft entlang der Schnittlinie B-B' durch die in den Fig. 3 und 4 gezeigte Ausführungsform eines funktionalen Einlegeelements 5. Das in der Fig. 8 im Querschnitt gezeigte funktionale Einlegeelement 5 unterscheidet sich von dem in der Fig. 7 dargestellten nur dahingehend, dass das als Antenne 10b ausgeformte elektrisch leitfähige Element 10 zwischen der transparenten Substratschicht 8 und der opaken Schicht 7 angeordnet ist. In der in der Fig. 8 gezeigten Ausführungsform ist beispielsweise die transparente Substratschicht 8 eine PET-Folie mit einer Dicke von 100 µm, und die opake Schicht 7 eine PET-Folie mit einer Dicke von 125 µm und das als Antenne 10b ausgeformte elektrisch leitfähige Element 10 ein elektrisch leitfähiges Polymer, wie beispielsweise Polyanilin mit einer Dicke von 20 µm.

In der Fig. 9 ist der Querschnitt durch eine weitere Ausführungsform eines funktionalen Einlegeelements 5 gezeigt. Der Querschnitt verläuft entlang der Schnittlinie C-C' durch die in den Fig. 3 und 4 gezeigte Ausführungsform eines funktionalen Einlegeelements 5. In der in der Fig. 9 gezeigten Ausgestaltung ist das elektrisch leitfähige Element 10, das als Feuchtigkeitssensor 10c ausgeformt ist, auf der transparenten Substratschicht 8 angeordnet, wobei das elektrisch leitfähige Element 10 auf derjenigen Oberfläche der transparenten Substratschicht 8 angeordnet ist, die nicht direkt benachbart zur opaken Schicht 7 ist. In der in der Fig. 9 gezeigten Ausführungsform ist beispielsweise die transparente Substratschicht 8 eine PET-Folie mit einer Dicke von 100 µm, die opake Schicht 7 eine PET-Folie mit einer Dicke von 125 µm und das als Feuchtigkeitssensor 10c ausgeformte elektrisch leitfähige Element 10 eine auf die transparente Substratschicht 8 aufgebrachte ITO-Beschichtung mit einer Dicke von 10 µm an der einen Seite und 20 µm an der anderen Seite. Alternativ ist aber auch möglich, dass die Trägerschicht 6 als eine transparente Substratschicht 8, die in Bereichen opak eingefärbt ist, ausgebildet ist. Beispielsweise könnten die Bereiche transparenten Substratschicht, auf denen in der in der Fig. 9 gezeigten Ausführungsform eine opake Schicht 7 angeordnet ist alternativ auch opak eingefärbt sein, so dass eine separate opake Schicht 7 in dieser Ausführungsform nicht notwendig ist.

In der Fig. 10 ist der Querschnitt durch eine weitere Ausführungsform eines funktionalen Einlegeelements 5 gezeigt. Der Querschnitt verläuft entlang der Schnittlinie C-C' durch die in den Fig. 3 und 4 gezeigte Ausführungsform eines funktionalen Einlegeelements 5. Das in der Fig. 10 im Querschnitt gezeigte funktionale Einlegeelement 5 unterscheidet sich von dem in der Fig. 9 dargestellten nur dahingehend, dass das als Feuchtigkeitssensor 10c ausgeformte elektrisch leitfähige Element 10 zwischen der transparenten Substratschicht 8 und der opaken Schicht 7 angeordnet ist. In der in der Fig. 10 gezeigten Ausführungsform ist beispielsweise die transparente Substratschicht 8 eine PET-Folie mit einer Dicke von 100 µm, und die opake polymere Schicht 7 eine PET-Folie mit einer Dicke von 125 µm und das als Feuchtigkeitssensor 10c ausgeformte elektrisch leitfähige Element 10 ein elektrisch leitfähiges Polymer, wie beispielsweise Polyanilin mit einer Dicke von 10 µm an der einen Seite und 20 µm an der anderen Seite.

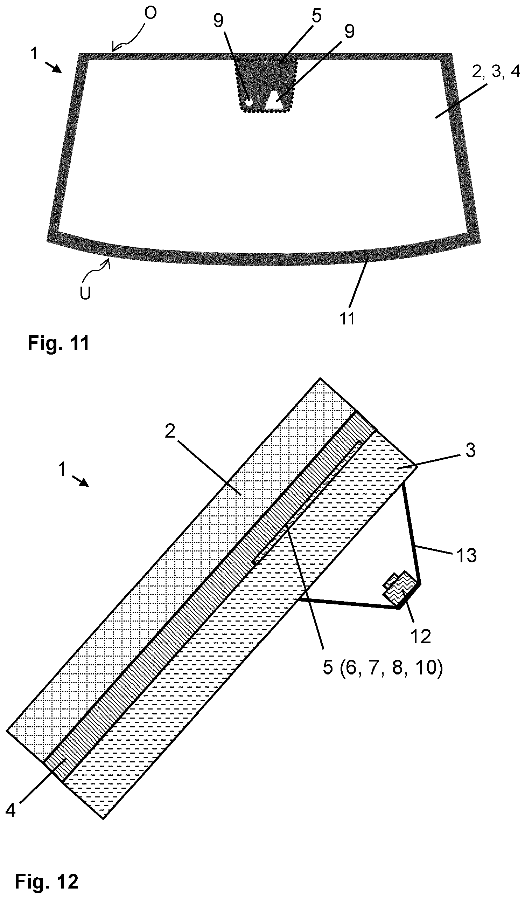

In der Fig. 11 ist eine weitere Ausführungsform einer erfindungsgemäßen Verbundscheibe 1 dargestellt. Die in der Fig. 11 dargestellte Verbundscheibe 1 unterscheidet sich von der in der Fig. 1 dargestellten nur dahingehend, dass sie zusätzlich einen peripheren Abdeckdruck 11 aus Emaille umfasst. Die opake Schicht 7 oder der opak eingefärbte Bereich der transparenten Substratschicht 8 (in Fig. 11 nicht explizit dargestellt) des funktionalen Einlegeelements 5 und der periphere Abdeckdruck 11 haben im Wesentlichen die gleiche optische Dichte und sind in der in Fig. 11 gezeigten Ausführungsform dunkelgrau. Zur Verdeutlichung wo das funktionale Einlegeelement 5 in der in Fig. 11 gezeigten Ausführungsform angeordnet ist, ist dieses in der Fig. 11 mit einer schwarz-gestrichelten Umrandung gekennzeichnet. In der in Fig. 11 gezeigten Ausführungsform ist der periphere Abdeckdruck 11 nur benachbart zu den äußeren Kanten der Verbundscheibe 1 aufgebracht. Es ist aber auch möglich, dass zusätzlich auch noch ein Abdeckdruck 11 außen um das funktionale Einlegeelement 5 herum aufgebracht wird.

In der Fig. 12 ist eine weitere Ausführungsform einer erfindungsgemäßen Fahrzeug-Verbundscheibe 1 gezeigt, die sich von der in der Fig. 1 gezeigten Ausführungsform nur dahingehend unterscheidet, dass diese zusätzlich einen auf eine Aussparung 8 (in der Fig. 12 nicht gezeigt) oder einen Bereich in dem die opake Schicht 7 oder alternativ der opak eingefärbte Bereich der transparenten Substratschicht 8 (in der Fig. 12 nicht gezeigt) durchlässig für Infrarotstrahlung mit einer Wellenlänge im Bereich zwischen 800 nm und 1100 nm ist, gerichteten optischen Sensor 12, der über eine Halterung 13 innenraumseitig an der als Innenscheibe ausgebildeten zweiten Scheibe 3 angebracht ist, umfasst. Der optische Sensor 12 ist beispielsweise für den Fall, dass die opake Schicht 7 eine Aussparung 8 aufweist, auf die der Sensor gerichtet ist, eine Fahrspurkamera oder für den Fall, dass die opake Schicht 7, oder alternativ der opak eingefärbte Bereich der transparenten Substratschicht 8, einen Bereich aufweist, in dem sie durchlässig für Infrarotstrahlung mit einer Wellenlänge im Bereich zwischen 800 nm und 1100 nm ist, auf den der Sensor gerichtet ist, ein LIDAR Sensor. Die Detektionsrichtung des optischen Sensors 10 ist außenseitig der Fahrzeug-Verbundscheibe 1 in etwa horizontal nach vorne gerichtet. Strahlung, die in einem sogenannten Sensorfenster horizontal durch die Fahrzeug-Verbundscheibe 1 tritt, wird durch den optischen Sensor 12 detektiert.

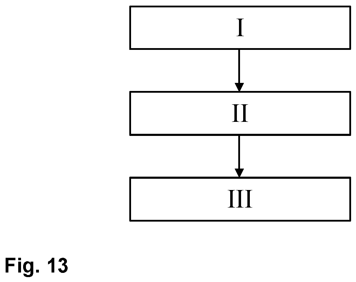

In der Fig. 13 ist das Fließdiagramm eines erfindungsgemäßen Verfahrens zur Herstellung einer erfindungsgemäßen Verbundscheibe 1 dargestellt. In einem ersten Schritt 1 werden eine erste Scheibe 2, eine zweite Scheibe 3, mindestens eine thermoplastische Zwischenschicht 4 und ein funktionales Einlegeelement 5, mindestens umfassend eine Trägerschicht 6 und mindestens ein elektrisch leitfähiges Element 10, bereitgestellt. In einem zweiten Schritt II werden die mindestens eine thermoplastische Zwischenschicht 4 und das funktionale Einlegeelement 5 zwischen der ersten Scheibe 2 und der zweiten Scheibe 3 angeordnet. In einem dritten Schritt III wird die erste Scheibe 2 mit der zweiten Scheibe 3 über die mindestens eine thermoplastische Zwischenschicht 4 durch Lamination verbunden.

### Bezugszeichenliste:

- 1: Verbundscheibe
- 2: erste Scheibe
- 3: zweite Scheibe
- 4: thermoplastische Zwischenschicht
- 5: funktionales Einlegeelement
- 6: Trägerschicht
- 7: opake Schicht
- 8: transparente Substratschicht
- 9: Aussparung
- 10: elektrisch leitfähiges Element
- 10a: heizbares Element
- 10b: Antenne
- 10c: Feuchtigkeitssensor
- 11: Abdeckdruck
- 12: Sensor
- 13: Halterung

- O: Oberkante/Dachkante der Verbundscheibe
- U: Unterkante/Motorkante der Verbundscheibe
- M: Mittellinie

## Patentansprüche

1. Verbundscheibe (1), mindestens umfassend
- eine erste Scheibe (2) und eine zweite Scheibe (3), die über mindestens eine thermoplastische Zwischenschicht (4) miteinander verbunden sind, und
- ein funktionales Einlegeelement (5), mindestens umfassend eine Trägerschicht (6) und mindestens ein elektrisch leitfähiges Element (10),
wobei das funktionale Einlegeelement (5) zwischen der ersten Scheibe (2) und der zweiten Scheibe (3) angeordnet ist,
wobei
(i) die Trägerschicht (6) eine transparente Substratschicht (8) und eine opake Schicht (7) umfasst, und wobei die transparente Substratschicht (8) und die opake Schicht (7) die gleichen äußeren Abmessungen aufweisen, oder wobei
(ii) die Trägerschicht (6) eine transparente Substratschicht (8) umfasst, die zumindest bereichsweise opak eingefärbt ist.

2. Verbundscheibe (1) nach Anspruch 1, wobei im funktionalen Einlegeelement (5) das mindestens eine elektrisch leitfähige Element (10) auf der transparenten Substratschicht (8) angeordnet ist.

3. Verbundscheibe (1) nach Anspruch 1, wobei im funktionalen Einlegeelement (5) das mindestens eine elektrisch leitfähige Element (10) zwischen der transparenten Substratschicht (8) und der opaken Schicht (7) angeordnet ist.

4. Verbundscheibe (1) nach einem der Ansprüche 1 bis 3, wobei das mindestens eine elektrisch leitfähige Element (10) unabhängig voneinander als ein elektrisch heizbares Element (10a), ein Feuchtigkeitssensor (10c), ein Drucksensor, eine Antenne (10b) oder ein Träger für elektronische Leitungen und Komponenten ausgebildet ist.

5. Verbundscheibe (1) nach einem der Ansprüche 1 bis 4, wobei die opake Schicht (7) mindestens eine Aussparung (9) aufweist und bevorzugt in Durchsicht mindestens im Bereich einer Aussparung (9) ein als ein elektrisch heizbares Element (10a) ausgebildetes elektrisch leitfähiges Element (10) angeordnet ist.

6. Verbundscheibe (1) nach Anspruch 5, wobei die mindestens eine Aussparung (9) ein Sensorfenster für einen optischen Sensor (12) ist.

7. Verbundscheibe (1) nach einem der Ansprüche 1 bis 6, wobei die transparente Substratschicht (8) ein Thermoplast oder ein Duroplast umfasst oder eine Glasschicht, die eine Dicke von kleiner oder gleich 0,5 mm aufweist, ist.

8. Verbundscheibe (1) nach einem der Ansprüche 1 bis 7, wobei das mindestens eine elektrisch leitfähige Element (10) eine elektrisch leitfähige Beschichtung, eine Kohlenstoff enthaltende Schicht oder eine metallische Schicht ist oder ein elektrisch leitfähiges Polymer enthält oder daraus besteht.

9. Verbundscheibe (1) nach einem der Ansprüche 1 bis 8, wobei das funktionale Einlegeelement (5) mindestens zwei elektrisch leitfähige Elemente (10) aufweist, die unterschiedlich strukturiert sind.

10. Verbundscheibe (1) nach einem der Ansprüche 1 bis 9, wobei die opake Schicht (7) zumindest abschnittsweise durchlässig für Infrarotstrahlung mit einer Wellenlänge im Bereich zwischen 800 nm und 1100 nm ist.

11. Verbundscheibe (1) nach einem der Ansprüche 1 bis 10, wobei die Verbundscheibe (1) eine Windschutzscheibe ist, die entlang einer Mittellinie (M) spiegelsymmetrisch ist, und das Einlegeelement (5) auf der Mittellinie (M) in der Nähe der Oberkante (O) der Windschutzscheibe angeordnet ist.

12. Verfahren zur Herstellung einer Verbundscheibe (1) nach einem der Ansprüche 1 bis 11, wobei
(a) eine erste Scheibe (2), eine zweite Scheibe (3), mindestens eine thermoplastische Zwischenschicht (4) und ein funktionales Einlegeelement (5), mindestens umfassend eine Trägerschicht (6) und mindestens ein elektrisch leitfähiges Element (10), bereitgestellt werden;
(b) die mindestens eine thermoplastische Zwischenschicht (4) und das funktionale Einlegeelement (5) zwischen der ersten Scheibe (2) und der zweiten Scheibe (3) angeordnet werden; und
(c) die erste Scheibe (2) über die mindestens eine thermoplastische Zwischenschicht (4) mit der zweiten Scheibe (3) durch Lamination verbunden wird.

13. Verwendung einer Verbundscheibe nach einem der Ansprüche 1 bis 11 als Fahrzeugscheibe, bevorzugt als Windschutzscheibe eines Kraftfahrzeugs.

## Claims

1. Composite pane (1), at least comprising
- a first pane (2) and a second pane (3) joined to one another via at least one thermoplastic intermediate layer (4) and
- a functional inlay element (5), at least comprising a carrier layer (6) and at least one electrically conductive element (10),
wherein the functional inlay element (5) is arranged between the first pane (2) and the second pane (3), wherein
(i) the carrier layer (6) comprises a transparent substrate layer (8) and an opaque layer (7), and wherein the transparent substrate layer (8) and the opaque layer (7) have the same external dimensions, or wherein
(ii) the carrier layer (6) comprises a transparent substrate layer (8) which is opaquely colored, at least in regions.

2. Composite pane (1) according to claim 1, wherein in the functional inlay element (5), the at least one electrically conductive element (10) is arranged on the transparent substrate layer (8).

3. Composite pane (1) according to claim 1, wherein in the functional inlay element (5), the at least one electrically conductive element (10) is arranged between the transparent substrate layer (8) and the opaque layer (7).

4. Composite pane (1) according to one of claims 1 through 3, wherein the at least one electrically conductive element (10), independently of one another, is implemented as an electrically heatable element (10a), a moisture sensor (10c), a pressure sensor, an antenna (10b), or a carrier for electronic lines and component.

5. Composite pane (1) according to one of claims 1 through 4, wherein the opaque layer (7) has at least one cutout (9) and preferably, an electrically conductive element (10) implemented as an electrically heatable element (10a) is arranged in through-vision at least within the region of a cutout (9).

6. Composite pane (1) according to claim 5, wherein the at least one cutout (9) is a sensor window for an optical sensor (12).

7. Composite pane (1) according to one of claims 1 through 6, wherein the transparent substrate layer (8) comprises a thermoplastic or a thermosetting plastic or is a glass layer that has a thickness less than or equal to 0.5 mm.

8. Composite pane (1) according to one of claims 1 through 7, wherein the at least one electrically conductive element (10) is an electrically conductive coating, a carbon-containing layer, or a metallic layer, or contains or is made of an electrically conductive polymer.

9. Composite pane (1) according to one of claims 1 through 8, wherein the functional inlay element (5) has at least two electrically conductive elements (10) that are structured differently.

10. Composite pane (1) according to one of claims 1 through 9, wherein the opaque layer (7) is, at least in sections, transparent to infrared radiation with a wavelength in the range between 800 nm and 1100 nm.

11. Composite pane (1) according to one of claims 1 through 10, wherein the composite pane (1) is a windshield that is mirror-symmetric along a center line (M), and the inlay element (5) is arranged on the center line (M) in the vicinity of the upper edge (O) of the windshield.

12. Method for producing a composite pane (1) according to one of claims 1 through 11, wherein
(a) a first pane (2), a second pane (3), at least one thermoplastic intermediate layer (4) and a functional inlay element (5), at least comprising a carrier layer (6) and at least one electrically conductive element (10), are provided;
(b) the at least one thermoplastic intermediate layer (4) and the functional inlay element (5) are arranged between the first pane (2) and the second pane (3); and
(c) the first pane (2) is joined to the second pane (3) via the at least one thermoplastic intermediate layer (4) by lamination.

13. Use of a composite pane according to one of claims 1 through 11 as a vehicle pane, preferably as a windshield of a motor vehicle.

## Revendications

1. Panneau composite (1), comprenant au moins
- une première vitre (2) et une deuxième vitre (3) reliées entre elles par au moins une couche intermédiaire thermoplastique (4) et
- un élément d'incrustation fonctionnel (5), comprenant au moins une couche de support (6) et au moins un élément conducteur d'électricité (10),
dans lequel l'élément d'incrustation fonctionnel (5) est disposé entre la première vitre (2) et la deuxième vitre (3), dans lequel
(i) la couche de support (6) comprend une couche de substrat transparente (8) et une couche opaque (7), et dans lequel la couche de substrat transparente (8) et la couche opaque (7) ont les mêmes dimensions externes, ou dans lequel
(ii) la couche de support (6) comprend une couche de substrat transparente (8) qui est colorée de manière opaque, au moins dans certaines régions.

2. Panneau composite (1) selon la revendication 1, dans laquelle, dans l'élément d'incrustation fonctionnel (5), l'au moins un élément électriquement conducteur (10) est disposé sur la couche de substrat transparente (8).

3. Panneau composite (1) selon la revendication 1, dans laquelle dans l'élément d'incrustation fonctionnel (5), l'au moins un élément électriquement conducteur (10) est disposé entre la couche de substrat transparent (8) et la couche opaque (7).

4. Panneau composite (1) selon l'une des revendications 1 à 3, dans lequel l'au moins un élément conducteur d'électricité (10), indépendamment l'un de l'autre, est mis en oeuvre comme un élément électriquement chauffant (10a), un capteur d'humidité (10c), un capteur de pression, une antenne (10b), ou un support pour les lignes et composants électroniques.

5. Panneau composite (1) selon l'une des revendications 1 à 4, dans lequel la couche opaque (7) présente au moins une découpe (9) et, de préférence, un élément électriquement conducteur (10) mis en oeuvre en tant qu'élément électriquement chauffant (10a) est disposé en vision directe au moins dans la région d'une découpe (9).

6. Panneau composite (1) selon la revendication 5, dans laquelle l'au moins une découpe (9) est une fenêtre de capteur pour un capteur optique (12).

7. Panneau composite (1) selon l'une des revendications 1 à 6, dans lequel la couche de substrat transparent (8) comprend un plastique thermoplastique ou thermodurcissable ou est une couche de verre dont l'épaisseur est inférieure ou égale à 0,5 mm.

8. Panneau composite (1) selon l'une des revendications 1 à 7, dans lequel l'au moins un élément conducteur d'électricité (10) est un revêtement conducteur d'électricité, une couche contenant du carbone ou une couche métallique, ou contient un polymère conducteur d'électricité ou est constitué d'un tel polymère.

9. Panneau composite (1) selon l'une des revendications 1 à 8, dans laquelle l'élément d'incrustation fonctionnel (5) comporte au moins deux éléments conducteurs d'électricité (10) structurés différemment.

10. Panneau composite (1) selon l'une des revendications 1 à 9, dans lequel la couche opaque (7) est, au moins en partie, transparente au rayonnement infrarouge d'une longueur d'onde comprise entre 800 nm et 1100 nm.

11. Panneau composite (1) selon l'une des revendications 1 à 10, dans lequel le vitrage composite (1) est un pare-brise qui est symétrique le long d'une ligne centrale (M), et l'élément d'incrustation (5) est disposé sur la ligne centrale (M) à proximité du bord supérieur (O) du pare-brise.

12. Procédé de fabrication d'un panneau composite (1) selon l'une des revendications 1 à 11, dans lequel
(a) une première vitre (2), une deuxième vitre (3), au moins une couche intermédiaire thermoplastique (4) et un élément d'incrustation fonctionnel (5), comprenant au moins une couche de support (6) et au moins un élément conducteur d'électricité (10), sont fournis;
(b) la couche intermédiaire thermoplastique (4) au moins et l'élément d'incrustation fonctionnel (5) sont disposés entre la première vitre (2) et la deuxième vitre (3); et
(c) la première vitre (2) est reliée à la deuxième vitre (3) par laminage via au moins une couche intermédiaire thermoplastique (4).

13. Utilisation d'un panneau composite selon l'une des revendications 1 à 11 comme vitre de véhicule, de préférence comme pare-brise d'un véhicule automobile.
